# EUROPÄISCHE PATENTSCHRIFT

(11) **EP 4 573 438 B1**
(45) Veröffentlichungstag und Bekanntmachung des Hinweises auf die Patenterteilung: **25.11.2026**
(21) Anmeldenummer: 23754318.6
(22) Anmeldetag: 10.08.2023
(51) Int. Cl.: G06F 3/0481, G06F 3/04817

(54) **VERFAHREN ZUR BEREITSTELLUNG EINER GRAFISCHEN BENUTZEROBERFLÄCHE**
METHOD FOR PROVIDING A GRAPHICAL USER INTERFACE
PROCÉDÉ DE FOURNITURE D'UNE INTERFACE UTILISATEUR GRAPHIQUE

(30) Priorität: 17.08.2022 DE 102022120814
(43) Veröffentlichungstag der Anmeldung: 25.06.2025
(73) Patentinhaber: Plaza Digital Communication & Innovation GmbH, 55252 Wiesbaden (Mainz-Kastel) (DE)
(72) Erfinder: LOCH, Richard, 65936 Frankfurt (DE)
(74) Vertreter: Freischem & Partner Patentanwälte mbB
(86) Internationale Anmeldenummer: PCT/EP2023/072188
(87) Internationale Veröffentlichungsnummer: WO 2024/037968

(56) Entgegenhaltungen:
- EP-A2- 2 600 235
- US-A1- 2013 227 473
- US-A1- 2021 286 510

## Beschreibung

Die Erfindung betrifft ein Verfahren zur Bereitstellung einer grafischen Benutzeroberfläche.

Verfahren zur Bereitstellung einer grafischen Benutzeroberfläche der in Rede stehenden Art sehen vor, dass mittels einer Software eine grafische Benutzeroberfläche auf einem Anzeigebereich einer Bildwiedergabeeinrichtung angezeigt wird. Derartige grafische Benutzeroberflächen dienen dazu, Computer intuitiv bedienbar zu machen bzw. eine einfache und intuitive Bedienung des Computers zu ermöglichen.

Dabei handelt es sich bei den Computern zum einen um solche Computer, bei deren Nutzung der Computer als solcher verwendet wird, nämlich um gespeicherte Daten zu verarbeiten, wie beispielsweise PCs, Clients und/oder Server, die im Bereich der elektronischen Datenverarbeitung eingesetzt werden, zum anderen handelt es sich um eingebettete Computer, die in technischen Einrichtungen verwendet werden, um erweiterte Funktionalitäten zu ermöglichen, wie beispielsweise im Fall von Smartphones, sogenannten "smarten" Geräten der Haushaltstechnik, Haustechnik oder Unterhaltungstechnik.

Bekannte grafische Benutzeroberflächen, wie beispielsweise Windows, iOS und/oder Android sie bereitstellen bzw. verwenden, sind derart ausgebildet, dass durch eine Software eine definierte Anzahl Steuerelemente angezeigt werden. Die Steuerelemente ermöglichen eine Interaktion des Nutzers mit dem Steuerelement, durch die eine Aktion des Computers ausgelöst wird. Alternativ und/oder ergänzend können die Steuerelemente allerdings auch lediglich dazu dienen, dem Nutzer Informationen anzuzeigen. Derartige Steuerelemente werden, abhängig von ihrer Funktionalität, als Widgets und/oder Icons bezeichnet. Das Verfahren zur Bereitstellung der grafischen Nutzeroberfläche kann nun vorsehen, dass dem Nutzer eine definierte Anzahl derartiger Steuerelemente zur angezeigt wird. Als Beispiel hierfür kann der Startbildschirm der Benutzeroberfläche des Betriebssystems "Android" dienen. Dort können eine Reihe kachelförmige Elemente angeordnet werden. Im Falle einiger dieser Elemente ist es möglich, deren Größe zu ändern. Dies hat zur Folge, dass insgesamt weniger Steuerelemente angezeigt werden können. Daher werden derartige Systeme oftmals so konzipiert, dass sie - üblicherweise in beliebigem Umfang - erweiterbar sind, beispielsweise indem, wie im Falle Android, weitere Startbildschirme erstellt werden können, zwischen denen durch "Wischen", also eine bestimmten Berührungsgeste, gewechselt werden kann.

Eine derartige "unendliche Erweiterbarkeit" ist für bestimmte Anwendungsfälle grundsätzlich erstrebenswert, beispielsweise einem PC, der in einer Vielzahl unterschiedlicher Situationen für unterschiedlichste Aufgaben eingesetzt wird. Ein derartiger PC kann sowohl am Arbeitsplatz für Bürotätigkeiten genutzt werden, als auch im privaten Bereich zu Unterhaltungszwecken genutzt werden. Im jeweiligen Anwendungsbereich ist die Anzahl der zu nutzenden Programme zudem durch eine hohe Anzahl und Vielfalt geprägt, beispielsweise können im Rahmen einer Nutzung eine Vielzahl unterschiedlicher Anwendungsprogramme für unterschiedliche Zwecke zum Einsatz kommen, für die Privatnutzung können zudem eine weitere Auswahl an Programmen hinzukommen. Eine nahezu uneingeschränkte Erweiterbarkeit erscheint in derartigen Anwendungsfällen durchaus sinnvoll.

In der Praxis führt dies jedoch zu einer hohen Komplexität bei der Bedienung der jeweiligen grafischen Benutzeroberfläche, zudem besteht die Tendenz, eine inflationäre Anzahl von Programmen durch die Benutzeroberfläche zugänglich zu machen, von denen in der Praxis dann nur wenige benutzt werden. Die übrigen erhöhen im Wesentlichen die Unübersichtlichkeit der grafischen Benutzerschnittstelle. In Fällen, in denen sich die tatsächliche Nutzung der grafischen Benutzeroberfläche auf konkrete Anwendungsfälle bezieht, in denen nur wenige Steuerelemente tatsächlich benötigt werden, sind die gängigen grafischen Benutzeroberflächen daher nachteilig. Durch die "offene" Konzeption bekannter Benutzeroberflächen treten oftmals unwesentliche Funktionen in den Vordergrund, während wesentliche, d. h. insbesondere häufig benötigte, Funktionalitäten in den Hintergrund treten. Dabei kann es vorkommen, dass einige Funktionen aus dem Blickfeld und damit buchstäblich "in Vergessenheit" geraten. EP2600235A2 betrifft eine mobile Benutzeroberfläche, bei der App-Icons durch Gesten

in Widgets umgewandelt und deren Größe dynamisch verändert werden können. Bei Platzmangel werden andere Icons verschoben, auf andere Home-Screens ausgelagert oder die Vergrößerung unterlassen.

Der Erfindung liegt daher die Aufgabe zugrunde, ein Verfahren zur Bereitstellung einer grafischen Benutzeroberfläche aufzuzeigen, das es ermöglicht, eine grafische Benutzeroberfläche bereitzustellen, bei der die Möglichkeiten einer intuitiven Bedienung, insbesondere in Anwendungsfällen mit einer begrenzten Anzahl an benötigten Funktionalitäten, verbessert ist.

Die Aufgabe wird gelöst durch ein Verfahren mit den Merkmalen des unabhängigen Anspruchs 1. Die Merkmale der abhängigen Ansprüche betreffen vorteilhafte Ausführungsformen.

Das Verfahren zur Bereitstellung einer grafischen Benutzeroberfläche sieht vor, dass mittels einer Software eine grafische Benutzeroberfläche auf einer Bildwiedergabefläche einer Bildwiedergabeeinrichtung angezeigt wird.

Bei der Bildwiedergabeeinrichtung kann es sich insbesondere um einen Monitor und/oder ein Display handeln. Auf der Bildwiedergabefläche können beispielsweise eine bestimmte Anzahl Bildpunkte dargestellt werden, die insbesondere in einem regelmäßigen Raster angeordnet sein können.

In einem Anzeigebereich werden durch die Software eine definierte Anzahl Steuerelemente angezeigt. Der Anzeigebereich kann einen Teil der Bildwiedergabefläche und/oder die gesamte Bildwiedergabefläche ausfüllen. Das Verfahren kann in diesem Zusammenhang auch vorsehen, dass der Anteil des Anzeigebereichs an der Bildwiedergabefläche variabel, d. h., der Anzeigebereich in seiner Größe skalierbar ist. Der Anzeigebereich bleibt jedoch insbesondere immer derart angezeigt, dass der Anzeigebereich auf der Bildwiedergabefläche vollständig sichtbar ist. Mit anderen Worten, die Fläche des Anzeigebereichs überschreitet insbesondere nie die Fläche der Bildwiedergabefläche.

Bei den Steuerelementen kann es sich insbesondere um Widgets und/oder Icons handeln. Unter Icons sind insbesondere kleine Bilder und/oder Piktogramme zu verstehen, mit denen ein Nutzer interagieren kann, um eine Aktion auszulösen. Bei der Aktion kann es sich beispielsweise um den Aufruf eines Programms und/oder das Öffnen einer Datei handeln. Im vorliegenden Fall kann eine Nutzerinteraktion mit einem Icon insbesondere die Vergrößerung der Darstellung des Icons und/oder insbesondere dessen Umwandlung in ein Widget auslösen.

Bei einem Widget handelt es sich insbesondere um eine grafische Repräsentanz eines Objekts, wie beispielsweise eines auf einem Computer ausgeführten Programmes, das Interaktionsmöglichkeiten mit einem Nutzer ermöglicht, die typischerweise über diejenigen von Icons hinausgehen. So können beispielsweise innerhalb des Widgets unterschiedliche Schaltflächen mit unterschiedlichen Funktionalitäten angeboten werden. Weiter können innerhalb des Widgets insbesondere grafische Ausgaben der Programme, wie beispielsweise Informationen dargestellt bzw. wiedergegeben werden. Hierdurch kann sich ein Widget beispielsweise auch für die Wiedergabe von Videostreams eignen.

Das Verfahren kann insbesondere vorsehen, dass wenigstens einem der Steuerelemente eine Mehrzahl Programme zugeordnet ist, mit denen mittels des Steuerelements interagiert werden kann. Dies bietet sich insbesondere dann an, wenn eine Mehrzahl Programme, die beispielsweise einen ähnlichen Zweck erfüllt, zu einer Gruppe zusammengefasst werden soll. Hierbei kann es sich Zweckmäßigerweise um Programme handeln, die typischerweise alternativ und nicht gleichzeitig genutzt werden. So können beispielsweise eine Mehrzahl Programme, die der Wiedergabe der Inhalte unterschiedlicher Streamingdienste dienen, einem Steuerelement zugeordnet sein.

Das Verfahren kann insbesondere Vorsehen, dass eines der Mehrzahl Programme ausgewählt werden kann, deren grafische Ausgabe in dem wenigstens einen Steuerelement angezeigt wird und/oder dessen Funktionalitäten über Schaltflächen des wenigstens einen Steuerelements angesprochen werden können. Hierfür kann das Steuerelement Schaltflächen aufweisen, mit denen das eine der Mehrzahl Programme ausgewählt werden kann. Die Schaltflächen können dynamisch gestaltet sein, also insbesondere optisch verborgen und nur auf eine Nutzerinteraktion hin sichtbar dargestellt werden. Beispielsweise können die Schaltflächen sichtbar dargestellt werden, wenn ein Nutzer mit einem definierten Bereich, beispielsweise einem Randbereich, des wenigstens einen Steuerelements interagiert. Diese Interaktion kann beispielsweise darin bestehen, dass der Nutzer mittels eines Zeigegeräts ein grafisches Symbol über den Randbereich bewegt und/oder die Bildwiedergabeeinrichtung im Bereich des Randbereichs berührt. Auf diese Weise kann der Nutzer in einfacher Weise zum Beispiel den Streamingdienst auswählen, dessen Inhalte durch das wenigstens eine Steuerelement wiedergegeben werden sollen.

Das Verfahren kann insbesondere vorsehen, dass durch die Auswahl eines der Mehrzahl Programme ein Wechsel des Programms, dessen grafische Ausgabe in dem wenigstens einen Steuerelement angezeigt wird und/oder dessen Funktionalitäten über Schaltflächen des wenigstens einen Steuerelements angesprochen werden können, herbeigeführt wird. Ein derartiger Wechsel hat den Vorteil, dass der Eindruck eines nahtlosen Übergangs in der Nutzung der Programme entsteht. Das Verfahren kann vorsehen, dass bei einem derartigen Wechsel des Programms das Programm, dessen grafische Ausgabe vor dem Wechsel in dem wenigstens einen Steuerelement angezeigt wurde und/oder dessen Funktionalitäten über Schaltflächen des wenigstens einen Steuerelements vor dem Wechsel angesprochen werden konnten unmittelbar nach dem Wechsel durch die Software geschlossen oder in einen Standby- und/oder Hintergrundmodus versetzt wird.

Das Verfahren sieht vor, dass die jeweilige Größe einzelner Steuerelemente veränderlich ist. Dies ermöglicht es, in Abhängigkeit der jeweils benötigten Funktionalität, einzelne Steuerelemente zu erweitern. Die Veränderung der Größe kann insbesondere dazu führen, dass Anzeigeelemente, beispielsweise für die Wiedergabe von Informationen, eingeblendet und/oder ausausgeblendet. Darüber hinaus können mit der Veränderung der Größe Schaltflächen mit unterschiedlichen Funktionalitäten eingeblendet und/oder ausgeblendet werden. Dabei kann das Verfahren insbesondere vorsehen, dass für jede Größe, die das jeweilige Steuerelement annehmen kann, bestimmte Anzeigeelemente und/oder Schaltflächen eines Steuerelements in dem Steuerelement dargestellt oder ausgeblendet werden.

Unter einer Schaltfläche ist insbesondere ein Bereich auf der Bildwiedergabefläche der Bildwiedergabeeinrichtung zu verstehen, mit dem eine Nutzerinteraktion möglich ist. Die Nutzerinteraktion kann beispielsweise in einem Berühren der Bildwiedergabeeinrichtung an der Stelle, an der die Schaltfläche angezeigt wird, bestehen. Alternativ und/oder ergänzend kann die Nutzerinteraktion das Ansprechen der Schaltfläche mittels eines Zeigegeräts, beispielsweise mittels einer Maus, umfassen.

Die Aufgabe wird insbesondere dadurch gelöst, dass bei der Änderung der Größe und/oder der Position eines der Steuerelemente durch die Software die Größe und/oder Position anderer Steuerelemente angepasst wird. Die Anpassung erfolgt dabei in Abhängigkeit von der Änderung der Größe und/oder der Position des einen Steuerelements.

Durch diese abhängige Skalierung wird es ermöglicht, dass die Steuerelemente, die für den Nutzer aktuell von Interesse sind, in den Vordergrund treten, indem sie eine größere Fläche des Anzeigebereichs einnehmen. Gleichzeitig wird durch die Software eine Änderung der Größe und/oder Position anderer Steuerelemente vorgenommen, wodurch ermöglicht wird, dass diese Steuerelemente zwar in der Wahrnehmung des Nutzers in den Hintergrund treten, soweit möglich jedoch für den Nutzer weiterhin sichtbar bleiben.

Die Software ordnet die Steuerelemente insbesondere derart an, dass diese ohne sich zu überlappen in einem zweidimensionalen Muster aneinander angrenzen. Das Verfahren kann insbesondere vorsehen, dass die Änderung der Größe und/oder der Position der Steuerelemente durch die Software immer derart erfolgt, dass weiterhin die gesamte definierte Anzahl Steuerelemente sichtbar bleibt. Das Verfahren kann dies zumindest soweit vorsehen, soweit dies die zur Verfügung stehende Gesamtfläche des Anzeigebereichs und/oder vorgegebene Mindestgrößen einzelner Steuerelemente zulassen.

Mit anderen Worten kann durch die Software eine Neuanordnung der Steuerelemente insbesondere derart erfolgen, dass, zumindest soweit dies möglich ist, keines der Steuerelemente "verschwindet". Dies heißt insbesondere, dass bei der Vergrößerung eines Steuerelements, beispielsweise auf eine Nutzerinteraktion hin, die übrigen Steuerelemente zunächst so angeordnet und insbesondere verkleinert werden, dass zunächst noch sämtliche Steuerelemente für den Nutzer sichtbar bleiben. Sobald die zur Verfügung stehende Gesamtfläche des Anzeigebereichs jedoch nicht mehr ausreicht, um sämtliche Steuerelemente darzustellen, kann das Verfahren vorsehen, dass einzelne Steuerelemente ausgeblendet werden. Dies kann insbesondere dann vorgesehen sein, wenn andernfalls vorgegebene Mindestgrößen einzelner Steuerelemente unterschritten würden.

Alternativ und oder ergänzend kann das Verfahren vorsehen, dass Änderungen der Größe und/oder der Position einzelner Steuerelemente lediglich insoweit möglich sind, als durch die Software die Größe und/oder Position anderer Steuerelemente derart angepasst werden kann, dass die gesamte definierte Anzahl an Steuerelementen dem Nutzer weiterhin sichtbar angezeigt wird.

Mit anderen Worten kann durch die Software eine Neuanordnung der Steuerelemente insbesondere derart erfolgen, dass sichergestellt ist, dass keines der Steuerelemente "verschwindet". Dies heißt insbesondere, dass bei der Vergrößerung eines Steuerelements, beispielsweise auf eine Nutzerinteraktion hin, die übrigen Steuerelemente zunächst so angeordnet und insbesondere verkleinert werden, dass noch sämtliche Steuerelemente für den Nutzer sichtbar bleiben. Sobald die zur Verfügung stehende Gesamtfläche des Anzeigebereichs jedoch nicht mehr ausreichen würde, um sämtliche Steuerelemente darzustellen, kann das Verfahren vorsehen, dass eine weitere Vergrößerung einzelner Steuerelemente nicht mehr möglich ist.

Das Verfahren kann insbesondere vorsehen, dass bei einer Änderung der Größe und/oder Position eines Steuerelements durch die Software die Größe und/oder Position anderer Steuerelemente derart angepasst wird, dass die Steuerelemente den Anzeigebereich ausfüllen. Dies heißt insbesondere, dass durch die Software die Größen und/oder Positionen der einzelnen Steuerelemente derart gewählt werden, dass die gesamte Fläche des Anzeigebereichs durch Steuerelemente, die in einem zweidimensionalen Muster aneinander angrenzenden, ausgefüllt wird. Dies hat zum einen einen ästhetischen Mehrwert, da der gesamte Anzeigebereich "gefüllt" wirkt, zum anderen einen praktischen Nutzen, da die zur Verfügung stehende Fläche de Anzeigebereichs so gut wie möglich ausgenutzt wird.

Das Verfahren kann insbesondere vorsehen, dass der Anzeigebereich in Teilbereiche unterteilt ist und die Steuerelemente sich jeweils über eine ganzzeilige Anzahl an Teilbereichen erstrecken. Dabei können die Teilbereiche insbesondere ein den Anzeigebereich ausfüllendes regelmäßiges zweidimensionales Raster bilden. Durch eine derartige Vorgabe von Teilbereichen wird die Zuweisung von unterschiedlichen Größen und/oder Positionen an die Steuerelemente vereinfacht. Durch die so geschaffene Rastervorgabe sind die möglichen Kombinationen von Größen und Positionen begrenzt. Auch kann das Verfahren vorsehen, den Steuerelementen für deren unterschiedliche vorgegebene Darstellungsgrößen lediglich bestimmte Größen zugewiesen werden, die ganzzahligen Anzahlen von Teilbereichen entsprechen.

Das Verfahren kann insbesondere vorsehen, dass für einzelne Steuerelemente jeweils unterschiedliche definierte Größen definiert sind, die diese Steuerelemente jeweils annehmen können. Dies bedeutet insbesondere, dass die einzelnen Steuerelemente bei der Anpassung ihrer Größe durch die Software und/oder bei der Änderung ihrer Größe aufgrund einer Nutzerinteraktion und/oder eines auslösenden Ereignisses jeweils lediglich die für das jeweilige Steuerelement definierten Größen annehmen können. Hierdurch wird die Skalierung erheblich erleichtert, da diese inkrementellen Regeln folgt. Das heißt, beim Anpassen der Größen und neuem anordnen der Steuerelemente auf dem Anzeigebereich muss die Software bei der Auswahl der Größen der Steuerelemente lediglich bestimmte definierte Größen, die infrage kommen können, berücksichtigen. Dies ermöglicht es der Software, diese Aufgabe in kürzester Zeit bei einer geringen Belastung der zur Verfügung stehenden Hardware-Ressourcen zu erfüllen, wodurch sich insbesondere eine "flüssige" Bedienbarkeit ergibt.

Für die unterschiedlichen definierten Größen für die Steuerelemente kann jeweils das Erscheinungsbild des Steuerelements definiert sein. Auf diese Weise wird der Skalierungsvorgang nochmals vereinfacht, da das Erscheinungsbild des jeweiligen Steuerelements nicht größenabhängig berechnet werden muss, sondern lediglich auf definierte Erscheinungsbilder, und damit insbesondere auf gespeicherte Grafikdateien, zurückgegriffen werden kann. Zudem kann das Verfahren insbesondere vorsehen, dass für die unterschiedlichen definierten Größen jeweils die Funktionalität definiert ist, die bei Anzeige des Steuerelements in der jeweiligen definierten Größe bereitgestellt wird. Dadurch kann beispielsweise definiert sein, dass ein Wetter-Widget bei einer bestimmten Darstellungsgröße die aktuelle Temperatur anzeigt und wenn es in der nächstgrößeren definierten Größe angezeigt wird, zusätzlich eine Regenvorhersage anzeigt.

Das Verfahren kann vorsehen, dass das Anpassen der Größe und/oder Position der Steuerelemente durch die Software in Abhängigkeit von der Nutzung des jeweiligen Steuerelements erfolgt. Insbesondere kann das Verfahren vorsehen, dass häufiger genutzte Steuerelemente und/oder Steuerelemente, deren letzte Nutzung eine kürzere Zeit zurück liegt, größer angezeigt und/oder weiter oben weiter oben auf dem Anzeigebereich angeordnet werden als seltener genutzte Steuerelemente und/oder Steuerelemente, deren letzte Nutzung eine längere Zeit zurück liegt. So kann beispielsweise ein Widget zur Anzeige von Wetterinformationen, welches durch den User häufig aufgerufen wird, eine höhere Priorität zugewiesen bekommen, was dazu führt, dass dieses Widget bei der Auswahl der Größen und/oder Positionen der Steuerelemente durch die Software dahingehend bevorzugt wird, dass es größer und/oder weiter oben im Anzeigebereich dargestellt wird, als andere Steuerelemente, die eine niedrigere Priorität genießen.

Das Verfahren kann insbesondere vorsehen, dass durch eine Nutzerinteraktion die Größe und/oder Position eines Steuerelements geändert werden kann. Die Änderung der Größe kann insbesondere ein Vergrößern und/oder Verkleinern des Steuerelements beinhalten. Dabei kann das Verfahren insbesondere vorsehen, dass das Steuerelement die nächstgrößere und/oder die nächstkleinere definierte Größe auf die Nutzerinteraktion hin annimmt. Das Verfahren sieht in diesem Zusammenhang insbesondere vor, dass durch die Software bei jeder Änderung der Größe und/oder Position eines Steuerelements durch eine Nutzerinteraktion eine Anpassung der Größe und/oder Position anderer Steuerelemente durch die Software erfolgt. Dadurch kann sichergestellt werden, dass die Anzeige der Steuerelemente in einem entsprechenden zweidimensionalen Muster konsistent aufrechterhalten wird. Das Verfahren kann in diesem Zusammenhang insbesondere vorsehen, dass innerhalb des Steuerelements Schaltflächen zum Vergrößern und/oder Verkleinern des Steuerelements angezeigt werden. Die Schaltflächen zum Vergrößern und/oder die Schaltflächen zum Verkleinern des Steuerelements werden hierbei insbesondere lediglich auf eine Nutzerinteraktion mit dem jeweiligen Steuerelement hin angezeigt. In einer weiteren Nutzerinteraktion kann der Benutzer dann mit der Schaltfläche interagieren. Mit anderen Worten kann dies beispielsweise bedeuten, dass eine Berührung der Bildwiedergabeeinrichtung an der Stelle des Steuerelements und/oder die Bewegung eines Mauszeigers über das Steuerelement dazu führt, dass Schaltflächen zum Vergrößern und/oder Verkleinern des Steuerelements angezeigt werden. In einer weiteren Nutzerinteraktion können diese Schaltflächen dann angewählt werden, beispielsweise durch einen "Mausklick" oder dadurch, dass die Bildwiedergabeeinrichtung an der Stelle, an der die Schaltfläche angezeigt wird, berührt wird.

Das Verfahren kann insbesondere vorsehen, dass durch ein auslösendes Ereignis die Größe und/oder Position eines Steuerelements geändert wird. Die Änderung der Größe kann insbesondere ein Vergrößern und/oder Verkleinern des Steuerelements beinhalten. Dabei kann das Verfahren insbesondere vorsehen, dass das Steuerelement eine bestimmte definierte Größe und/oder Position auf das auslösende Ereignis hin einnimmt. Das Verfahren sieht in diesem Zusammenhang insbesondere vor, dass durch die Software bei jeder Änderung der Größe und/oder Position eines Steuerelements durch eine Nutzerinteraktion eine Anpassung der Größe und/oder Position anderer Steuerelemente durch die Software erfolgt. Dadurch kann sichergestellt werden, dass die Anzeige der Steuerelemente in einem entsprechenden zweidimensionalen Muster konsistent aufrechterhalten wird. Bei dem Auslösenden Ereignis kann es sich insbesondere um ein Signal eines Sensors handeln. Dabei kann das Signal das Überschreiten, Unterschreiten oder Erreichen eines bestimmten Wertes durch eine gemessene Größe betreffen. Alternativ kann es sich bei dem Ereignis um den Empfang einer bestimmten Information in Gestalt eines Datensignals handeln. So kann beispielsweise realisiert werden, dass die Temperatur eines Backofens auf einem Steuerelement angezeigt wird, das hierfür eine geeignete Größe annimmt, sobald der Backofen in Betrieb genommen wird, oder beim Eingang einer Unwetterwarnung diese auf einem hinreichend großen Steuerelement angezeigt wird.

Das Verfahren kann vorsehen, dass der Anzeigebereich einen Teil der Bildwiedergabefläche der Bildwiedergabeeinrichtung einnimmt und ein weiterer Teil der Bildwiedergabefläche durch einen weiteren Anzeigebereich eingenommen wird. In dem weiteren Anzeigebereich können insbesondere weitere Steuerelemente angezeigt werden. Bei den weiteren Steuerelementen kann es sich um Widgets und/oder Icons handeln.

Ein derartiger weiterer Anzeigebereich kann insbesondere dazu dienen, den durch das vorstehend beschriebene Verfahren "dynamisch" gestalteten Anzeigebereich durch einen "statisch" gestalteten Anzeigebereich zu ergänzen. Dabei ist statisch in diesem Zusammenhang nicht derart zu verstehen, dass die Darstellung des Anzeigebereichs unveränderlich ist, sondern lediglich, dass ein neues Anordnen anderer weiterer Steuerelemente im Falle einer Größenänderung eines weiteren Steuerelements durch die Software nicht erfolgt.

Das Verfahren kann vorsehen, dass ein weiteres Steuerelement auf eine Nutzerinteraktion hin durch die Software in einer erweiterten Darstellung angezeigt wird. Dadurch wird es ähnlich wie im Fall der vorstehend beschriebenen Steuerelemente möglich, die Funktionalität des Steuerelements, auf die der Nutzer zugreifen kann, zu erweitern. Dabei kann das Verfahren vorsehen, dass die erweiterte Darstellung des weiteren Steuerelements den Anzeigebereich und damit insbesondere wenigstens ein Steuerelement überlagert. Das Verfahren kann vorsehen, dass die erweiterte Darstellung des weiteren Steuerelements zusätzlich zu dem weiteren Steuerelement angezeigt wird. Dies kann insbesondere dadurch erfolgen, dass der optische Eindruck eines "Aufklappens" des in dem weiteren Anzeigebereich angeordneten weiteren Steuerelements in den Anzeigebereich hinein entsteht. Insbesondere kann das Verfahren vorsehen, dass lediglich ein weiteres Steuerelement gleichzeitig in der erweiterten Darstellung angezeigt wird. Diese erweiterte Darstellung kann sich über die gesamte Höhe des Anzeigebereichs erstrecken. Das Verfahren kann weiterhin vorsehen, dass die erweiterte Darstellung eines Steuerelements in mehreren Stufen erweitert werden kann, wobei sich die erweiterten Darstellungen in den einzelnen Stufen hinsichtlich ihrer Größe und/oder den angebotenen Funktionalitäten unterscheiden.

Das Verfahren kann vorsehen, dass wenigstens eines der Steuerelemente und/oder wenigstens eines der weiteren Steuerelemente zur Steuerung und/oder Überwachung einer technischen Einrichtung dient. Dabei kann das Steuerelement insbesondere mit einem Aktor und/oder Sensor zusammenwirken. Das vorstehend beschriebene Verfahren zum Bereitstellen einer Benutzeroberfläche eignet sich insbesondere dann, wenn ein Computer, der durch die bereitgestellte Benutzeroberfläche bedient wird, zur Steuerung und/oder Überwachung einer technischen Einrichtung genutzt wird. Durch günstige Hardwarepreise sowie die Möglichkeit, Computer in Steuerungssysteme für technische Einrichtungen einzubetten, bietet es sich zunehmend an, für die Steuerung und/oder Überwachung technischer Einrichtungen explizit bestimmte Computer zu nutzen. Diese Computer können beispielsweise in Form eines Tabletcomputers realisiert sein und die Steuerung und/oder Überwachung von Küchengeräten ermöglichen, indem Steuerelemente über die Hardware des Computers mit entsprechenden Sensoren und/oder Aktoren zusammenwirken. Darüber hinaus können derartige Computer dann beispielsweise Unterhaltungsfunktionen oder die Möglichkeit des Zugriffs auf Informationen bereitstellen. So kann ein derartiger Computer es ermöglichen, während des Kochens einen Videostream oder einen Musikstream abzuspielen und/oder in digitalen Kochbüchern Rezepte abzurufen. Derartige Computer können auch, insbesondere mitsamt der Bildwiedergabeeinrichtung, in eine Küchenmöbelanordnung integriert sein.

Insbesondere derartige zur Überwachung einer technischen Einrichtung bestimmte und genutzte Computer werden regelmäßig nicht derart universell verwendet, wie beispielsweise ein vollwertiger tragbarer PC. Das vorstehend beschriebene Verfahren zur Bereitstellung einer Benutzeroberfläche ist daher gerade in derartigen Anwendungsfällen vorteilhaft, da hier eine überschaubare Anzahl von Funktionen und/oder Informationen in möglichst haptischer und intuitiver Weise zugänglich gemacht werden soll und diese Anforderung den Wunsch nach universeller Einsetzbarkeit und nahezu beliebiger Erweiterbarkeit überwiegt.

Bei der technischen Einrichtung kann sich insbesondere um ein Küchengerät, beispielsweise um eine Küchenmaschine, einen Herd, einen Geschirrspüler und/oder einen Kühlschrank, handeln. Gerade im Bereich moderner Küchen lässt sich durch eine derartige Automatisierung mittels eines Computers ein erheblicher Nutzungs- und Komfortmehrwert schaffen. Hierbei ist es zum einen wünschenswert, dass bestimmte Informationen, beispielsweise die Temperatur eines im Betrieb befindlichen Herdes, nach Möglichkeit im Fokus der Aufmerksamkeit des Benutzers bleiben. Mit einem Verfahren der vorstehend beschriebenen Art kann eine Benutzeroberfläche, die dies leisten kann, bereitgestellt werden.

Alternativ und/oder ergänzend kann es sich bei der technischen Einrichtung um eine haustechnische Einrichtung handeln. Bei der haustechnischen Einrichtung kann es sich insbesondere um eine Zugangskontroll-Einrichtung zur Kontrolle des Zugangs zu einer Immobilie und/oder eines Bereiches einer Immobilie handeln. Eine derartige Zugangskontroll-Einrichtung kann beispielsweise ein Bewegungsmelder an einer Einfahrt eines Grundstücks und/oder eine Klingel an einer Tür einer Wohnung sein. Das Verfahren kann in einem derartigen Zusammenhang beispielsweise vorsehen, dass ein Steuerelement beim Auslösen eines Bewegungsmelders und/oder beim Betätigen eines Klingelschalters in einer bestimmten definierten Größe dargestellt und das Bild einer Überwachungskamera in diesem Steuerungselement dargestellt wird.

Alternativ und/oder ergänzend kann es sich bei der technischen Einrichtung auch um ein anderes haustechnisches und/oder haushaltstechnisches Gerät handeln, wie beispielsweise eine Waschmaschine, einen Wäschetrockner, einen selbstfahrenden Rasenmäher und/oder Staubsauger, eine Wellnesseinrichtung, wie einen Whirlpool oder eine Sauna, einen Bestandteil einer Heizungs- und/oder Klimatisierungsanlage und/oder ein Beleuchtungselement.

Das Verfahren kann vorsehen, dass auf eine Nutzerinteraktion mit einem Steuerelement hin eine Funktionalität eines diesem Steuerelement zugeordneten Programm aufgerufen wird und die Größe dieses Steuerelements auf durch die Software auf dieselbe Nutzerinteraktion hin in eine für dieses Steuerelement und/oder dieses Programm definierte Nutzungsgröße verändert wird. Auf diese Weise kann beispielsweise mit einer einzigen Nutzerinteraktion die Wiedergabe eines Streamingdienstes gestartet werden und gleichzeitig das Steuerelement, durch das der Streamingdienst wiedergegeben wird, auf eine hierfür sinnvolle Nutzungsgröße skaliert werden. Hierdurch wird ein hohes Maß an Bedienkomfort erreicht.

Das Verfahren kann hierbei insbesondere vorsehen, dass die Nutzungsgrößen derart gewählt sind, dass wenigstens zwei Steuerelemente, insbesondere genau zwei Steuerelemente, gleichzeitig in ihrer für das jeweilige Steuerelement und/oder das jeweilige Programm definierten Nutzungsgröße sichtbar angezeigt werden können. Auf diese Weise wird in vielen denkbaren Nutzungsszenarien ein Höchstmaß an Nutzerfreundlichkeit erreicht. Beispielsweise kann ein Steuerelement in Nutzungsgröße zur Wiedergabe von Inhalten eines Streamingdienstes und gleichzeitig ein weiteres Steuerelement in Nutzungsgröße zur Steuerung eines Küchengeräts genutzt werden, beispielsweise wenn der Konsum eines Medieninhalts während des Kochens gewünscht ist. Dabei sind die Nutzungsgrößen insbesondere derart gewählt, dass durch die Software die Größe und/oder Position anderer Steuerelemente derart angepasst werden kann, dass die gesamte definierte Anzahl an Steuerelementen dem Nutzer weiterhin sichtbar angezeigt wird.

Das Verfahren sieht dabei insbesondere vor, dass mit den wenigstens zwei Steuerelemente, insbesondere genau zwei Steuerelemente, die gleichzeitig in Nutzungsgröße sichtbar angezeigt werden, gleichzeitig direkte Nutzerinteraktionen unmittelbar möglich sind, um Funktionalitäten der diesen Steuerelementen zugeordneten Programmen aufzurufen und/oder anzusprechen. Mit anderen Worten müssen sämtliche in Nutzungsgröße dargestellten Steuerelemente nicht erst durch eine erste Nutzerinteraktion "aktiviert" werden, um dann die jeweilige Funktionalität mittels einer weiteren Nutzerinteraktion aufzurufen, wie es beispielsweise in fensterbasierten Betriebssystemen der Fall ist, die lediglich ein "aktives" Fenster zulassen, dessen Inhalt unmittelbar durch Nutzerinteraktionen angesprochen werden kann. Hierdurch kann in den vorstehenden Szenarien eine flüssige Bedienung gewährleistet werden.

Das Verfahren kann insbesondere vorsehen, dass bei einem Wechsel des Programms, dessen grafische Ausgabe in dem wenigstens einen Steuerelement angezeigt wird und/oder dessen Funktionalitäten über Schaltflächen des wenigstens einen Steuerelements angesprochen werden können, die für dieses Steuerelement definierte Nutzungsgröße beibehalten und/oder das Steuerelement auf die für das bei dem Wechsel ausgewählte Programm definierte Nutzungsgröße skaliert wird. Hierdurch wird der Eindruck eines "nahtlosen" Wechsels zwischen den Programmen und damit das Bedienerlebnis verbessert.

Weitere praktische Ausführungsformen und Vorteile der Erfindung sind nachfolgend im Zusammenhang mit den Zeichnungen beschrieben. Es zeigen:
- Fig. 1: Eine schematische Darstellung der Aufteilung einer Bildwiedergabefläche einer Bildwiedergabeeinrichtung in Teilbereiche im Rahmen der Durchführung eines Verfahrens zur Bereitstellung einer grafischen Benutzeroberfläche,
- Fig. 2: Eine schematische Darstellung einer mit einem beispielhaften Verfahren zur Bereitstellung einer grafischen Benutzeroberfläche bereitgestellte beispielhafte grafische Benutzeroberfläche,
- Fig. 3: Die Benutzeroberfläche aus Figur 2 nach der Änderung der Größe und Position eines Steuerelements,
- Fig. 4: Die Benutzeroberfläche aus Figur 3 nach einer weiteren Änderung der Größe des Steuerelements,
- Fig. 5: Eine schematische Darstellung der Erweiterung weiterer Steuerelemente der beispielhaften grafischen Benutzeroberfläche.

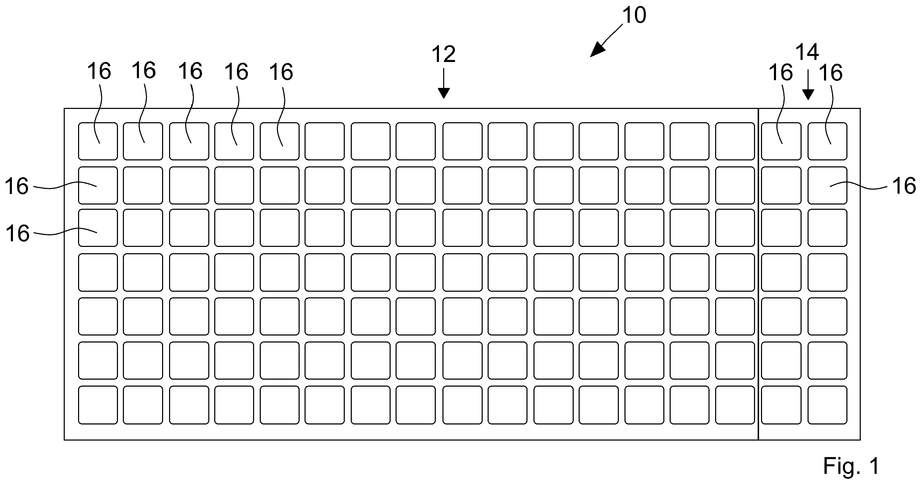

In Figur 1 ist beispielhaft dargestellt, wie die Bildwiedergabefläche 10 für die Durchführung eines beispielhaften Verfahrens zur Bereitstellung einer grafischen Benutzeroberfläche aufgeteilt sein kann.

Im gezeigten Beispiel nimmt ein Anzeigebereich 12 beispielhaft einen Teil der Bildwiedergabefläche 10 ein. Ein weiterer Teil der Bildwiedergabefläche 10 wird beispielhaft durch einen weiteren Anzeigebereich 14 eingenommen.

Wie im gezeigten Beispiel kann der Anzeigebereich 12 in Teilbereiche 16 unterteilt sein. Die Teilbereiche 16 können insbesondere wie im gezeigten Beispiel ein den Anzeigebereich 12 ausfüllendes regelmäßiges zweidimensionales Raster bilden.

Wie im gezeigten Beispiel kann der weitere Anzeigebereich 14 ebenfalls in Teilbereiche 16 unterteilt sein, wobei die Teilbereiche ebenfalls an den weiteren Anzeigebereich 14 ausfüllendes regelmäßiges zweidimensionales Raster bilden.

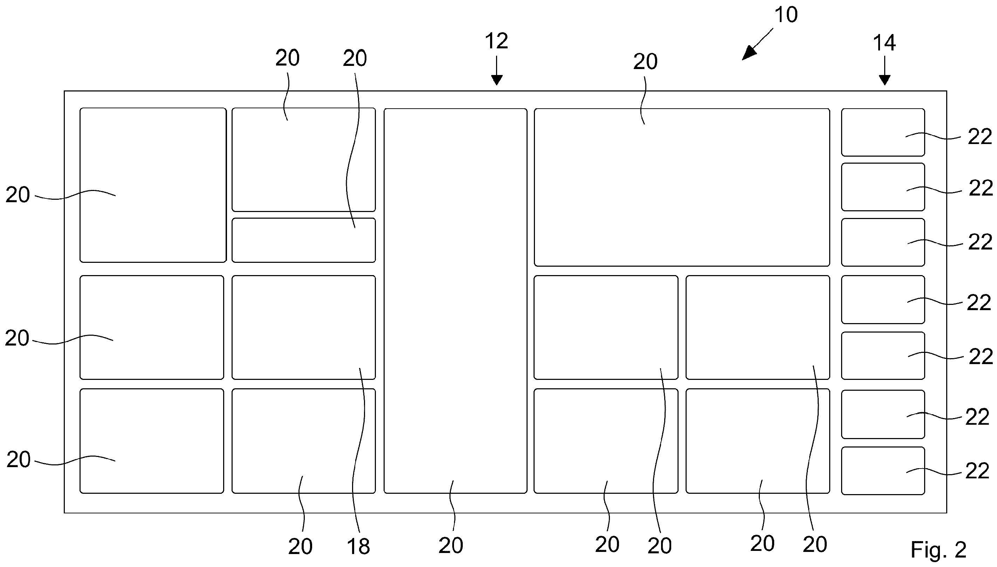

Das Verfahren zur Bereitstellung einer grafischen Benutzeroberfläche 18, wie sie beispielhaft in Figur 2 dargestellt ist, sieht nun vor, dass mittels einer Software eine grafische Benutzeroberfläche auf einer Bildwiedergabefläche 10 einer Bildwiedergabe angezeigt wird.

Das Verfahren sieht vor, dass wie im gezeigten Beispiel in einem Anzeigebereich 14 durch die Software eine definierte Anzahl Steuerelemente 18, 20 angezeigt werden.

Wie im gezeigten Beispiel können die Steuerelemente 18, 20 sich jeweils über eine ganzzahlige Anzahl an Teilbereichen 16 erstrecken.

Das Verfahren sieht vor, dass bei der Änderung der Größe und/oder Position eines Steuerelements 18 durch die Software die Größe und/oder Position anderer Steuerelemente 20 in Abhängigkeit von der Änderung der Größe und oder Position des einen Steuerelements 18 angepasst wird.

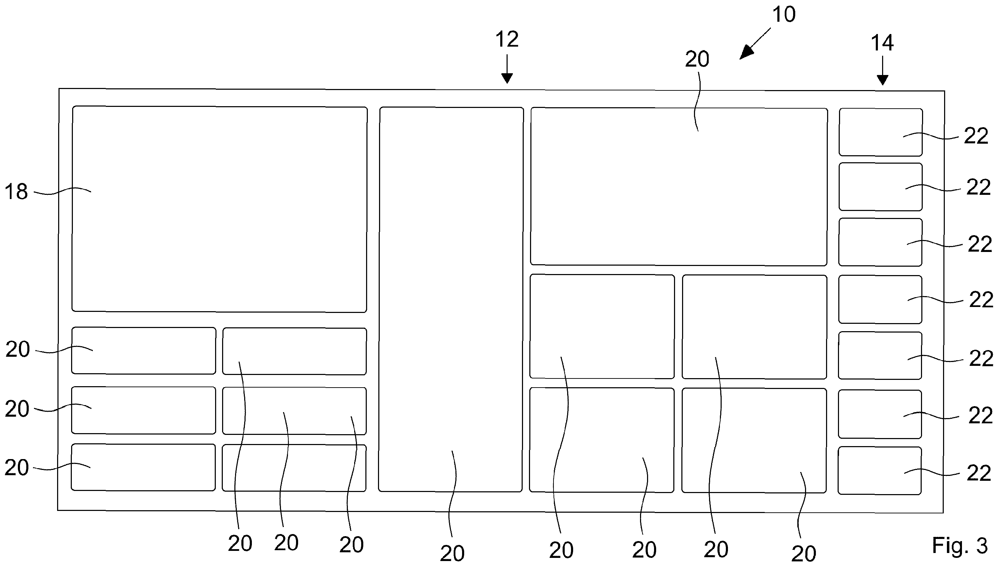

Dies kann beispielhaft beim Vergleich der Figuren 2 und 3 nachvollzogen werden. Figur 2 zeigt den Zustand einer mit dem beispielhaften Verfahren bereitgestellten Benutzeroberfläche vor einer Nutzerinteraktion. Beispielsweise kann durch eine Nutzerinteraktion mit dem Steuerelement 18 dieses vergrößert und seine Position verändert werden, wie dies aus dem Vergleich des in Figur 2 dargestellten Zustands der grafischen Benutzeroberfläche vor der Nutzerinteraktion und der beispielhaft in Figur 3 dargestellten grafischen Benutzeroberflächen nach der Benutzerinteraktion hervorgeht. Das Verfahren kann wie im gezeigten Beispiel vorsehen, dass die Größe und Position anderer Steuerelemente 20 durch die Software in Abhängigkeit der Änderung der Größe und der Position des Steuerelements 18 angepasst wird. Wie im gezeigten Beispiel kann das Verfahren vorsehen, dass lediglich ausgewählte andere Steuerelemente 20 im Hinblick auf ihre Größe und/oder Position verändert werden, während andere Steuerelemente 20 zunächst unverändert bleiben.

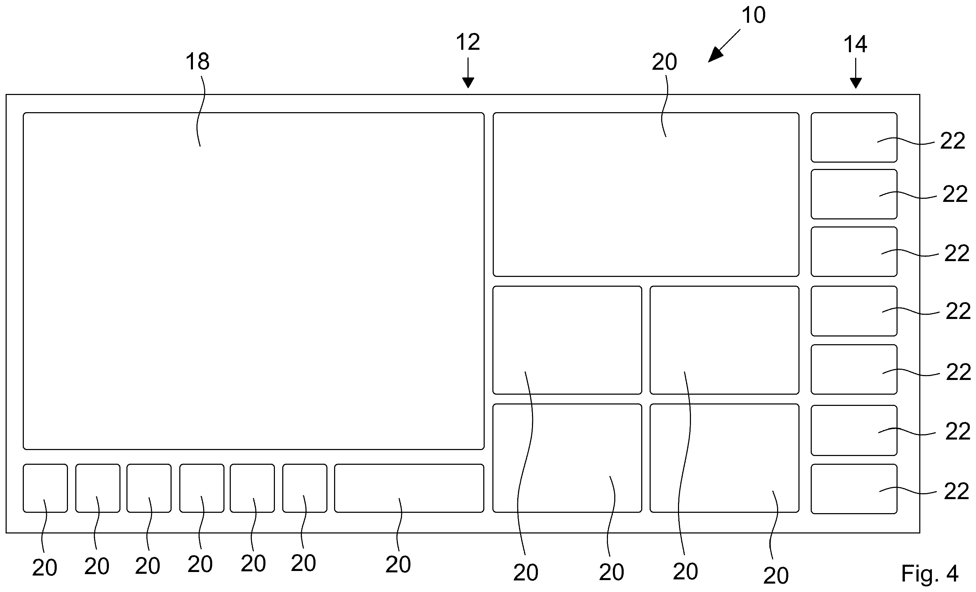

Wie beispielhaft in Figur 4 dargestellt, kann das Steuerelement 18 nach dem beispielhaften Verfahren, beispielsweise durch eine weitere Nutzerinteraktion mit dem Steuerelement 18, ausgehend von seiner in Fig. 3 dargestellten Größe nochmals vergrößert werden. Das Verfahren zur Bereitstellung der Nutzeroberfläche sieht vor, dass auch nach dieser Änderung der Größe und/oder Position des Steuerelementes 18 die durch die Software die Größe und/oder Position anderer Steuerelemente 20 in Abhängigkeit von der Änderung der Größe und/oder Position des Steuerelements 18 angepasst wird.

Hierbei kann, wie im gezeigten Beispiel, das Verfahren vorsehen, dass die Änderung der Größe und/oder Position der Steuerelemente 20 durch die Software derart erfolgt, dass, weiterhin die gesamte definierte Anzahl Steuerelemente 18, 20 sichtbar bleiben. Wie beispielhaft gezeigt, kann das Verfahren vorsehen, dass durch die Software die Größe und/oder Position der Steuerelemente 20 derart angepasst wird, dass die Steuerelemente 18, 20 den Anzeigebereich 12 ausfüllen. Dabei sieht das Verfahren insbesondere wie dargestellt vor, dass durch die Software die Größen und/oder Positionen der einzelnen Steuerelemente 20 derart gewählt werden, dass die gesamte Fläche des Anzeigebereichs 12 durch Steuerelemente 18, 20, die in einem zweidimensionalen Muster aneinander angrenzenden, ausgefüllt wird.

Wie beispielhaft gezeigt kann das Verfahren vorsehen, dass für einzelne Steuerelemente 18, 20 jeweils unterschiedliche definierte Größen definiert sind, die diese Steuerelemente 18, 20 jeweils annehmen können. Für diese Größen kann jeweils das Erscheinungsbild des Steuerelements 18, 20 definiert sein und insbesondere die Funktionalität, die bei Anzeige des Steuerelements 18, 20 in der jeweiligen definierten Größe bereitgestellt wird, definiert sein.

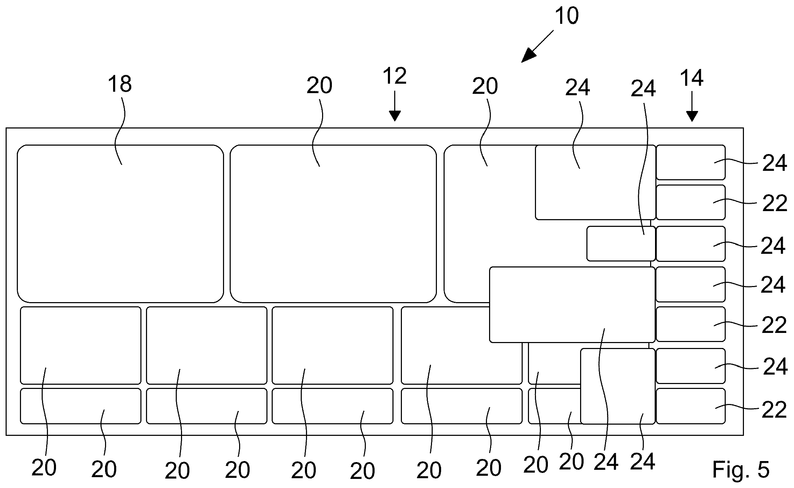

Wie im gezeigten Beispiel können in dem weiteren Anzeigebereich 14 weitere Steuerelemente 22 angezeigt werden. Dass Verfahren kann in diesem Zusammenhang insbesondere wie in Fig. 5 dargestellt vorsehen, dass weitere Steuerelemente 22 auf eine Nutzerinteraktion hin durch die Software in einer erweiterten Darstellung 24 angezeigt werden. Insbesondere kann das Verfahren wie Beispielhaft dargestellt vorsehen, dass die erweiterte Darstellungen 24 der weiteren Steuerelemente den Anzeigebereich 12 und insbesondere Steuerelemente 18, 20 überlagern.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 10: Bildwiedergabefläche
- 12: Anzeigebereich
- 14: weiterer Anzeigebereich
- 16: Teilbereiche
- 18: Steuerelement
- 20: Steuerelement
- 22: weiteres Steuerelement
- 24: erweiterte Darstellung

## Patentansprüche

1. Verfahren zur Bereitstellung einer grafischen Benutzeroberfläche, wobei mittels einer Software eine grafische Benutzeroberfläche auf einer Bildwiedergabefläche (10) einer Bildwiedergabeeinrichtung, insbesondere einem Monitor und/oder einem Display, angezeigt wird, wobei in einem Anzeigebereich (12) der Bildwiedergabefläche (10) durch die Software eine definierte Anzahl Steuerelemente (18, 20), insbesondere Widgets und/oder Icons, angezeigt werden, wobei die jeweilige Größe einzelner Steuerelemente (18, 20) veränderlich ist,
wobei bei der Änderung der Größe und/oder Position eines Steuerelements (18) durch die Software die Größe und/oder Position anderer Steuerelemente (20) in Abhängigkeit von der Änderung der Größe und/oder Position des einen Steuerelements (18) angepasst wird, **dadurch gekennzeichnet, dass** die Änderung der Größe und/oder der Position der Steuerelemente (20) durch die Software immer derart erfolgt, dass weiterhin die gesamte definierte Anzahl Steuerelemente (18, 20) sichtbar bleibt.

2. Verfahren nach Anspruch 1, **dadurch gekennzeichnet, dass** Änderungen der Größe und/oder der Position einzelner Steuerelemente (18) lediglich insoweit möglich sind, als durch die Software die Größe und/oder Position anderer Steuerelemente (20) derart angepasst werden kann, dass die gesamte definierte Anzahl an Steuerelementen (18, 20) dem Nutzer weiterhin sichtbar angezeigt wird.

3. Verfahren nach einem der vorigen Ansprüche, **dadurch gekennzeichnet, dass** durch die Software die Größe und/oder Position anderer Steuerelemente (20) derart angepasst wird, dass die Steuerelemente (18, 20) den Anzeigebereich (12) ausfüllen, insbesondere wobei durch die Software die Größen und/oder Positionen der einzelnen Steuerelemente (20) derart gewählt werden, dass die gesamte Fläche des Anzeigebereichs (12) durch Steuerelemente (18, 20), die in einem zweidimensionalen Muster aneinander angrenzen, ausgefüllt wird.

4. Verfahren nach einem der vorigen Ansprüche, **dadurch gekennzeichnet, dass** der Anzeigebereich (12) in Teilbereiche (16) unterteilt ist, insbesondere wobei die Teilbereiche (16) ein den Anzeigebereich (12) ausfüllendes regelmäßiges zweidimensionales Raster bilden, und die Steuerelemente (18, 20) sich jeweils über eine ganzzahlige Anzahl an Teilbereichen (16) erstrecken.

5. Verfahren nach einem der vorigen Ansprüche, **dadurch gekennzeichnet, dass** für einzelne Steuerelemente (18, 20) jeweils unterschiedliche definierte Größen definiert sind, die diese Steuerelemente (18, 20) jeweils annehmen können, und für diese Größen jeweils das Erscheinungsbild des Steuerelements (18, 20) definiert ist und insbesondere die Funktionalität, die bei Anzeige des Steuerelements (18, 20) in der jeweiligen definierten Größe bereitgestellt wird, definiert ist.

6. Verfahren nach einem der vorigen Ansprüche, **dadurch gekennzeichnet, dass** das Anpassen der Größe und/oder Position der Steuerelemente (20) durch die Software in Abhängigkeit von der Nutzung des jeweiligen Steuerelements (20) erfolgt, insbesondere wobei häufiger genutzte Steuerelemente (20) und/oder Steuerelemente (20), deren letzte Nutzung eine kürzere Zeit zurück liegt, größer angezeigt und/oder weiter oben auf dem Anzeigebereich angeordnet werden als seltener genutzte Steuerelemente (20) und/oder Steuerelemente (20), deren letzte Nutzung eine längere Zeit zurück liegt.

7. Verfahren nach einem der vorigen Ansprüche, **dadurch gekennzeichnet, dass** durch eine Nutzerinteraktion die Größe und/oder Position eines Steuerelements (18, 20) geändert werden kann, insbesondere wobei innerhalb des Steuerelements (18, 20) Schaltflächen zum Vergrößern und/oder verkleinern des Steuerelements (18, 20) angezeigt werden.

8. Verfahren nach einem der vorigen Ansprüche, **dadurch gekennzeichnet, dass** durch ein auslösendes Ereignis die Größe und/oder Position eines Steuerelements (18, 20) geändert werden wird, insbesondere wobei das Steuerelement (18, 20) eine bestimmte definierte Größe und/oder Position auf das auslösende Ereignis hin einnimmt.

9. Verfahren nach einem der vorigen Ansprüche, **dadurch gekennzeichnet, dass** der Anzeigebereich (12) einen Teil der Bildwiedergabefläche (10) der Bildwiedergabeeinrichtung einnimmt und ein weiterer Teil der Bildwiedergabefläche (10) durch einen weiteren Anzeigebereich (14) eingenommen wird, in dem weitere Steuerelemente (22), insbesondere Widgets und/oder Icons, angezeigt werden.

10. Verfahren nach Anspruch 9, **dadurch gekennzeichnet, dass** ein weiteres Steuerelement (22) auf eine Nutzerinteraktion hin durch die Software in einer erweiterten Darstellung (24) angezeigt wird, insbesondere wobei die erweiterte Darstellung (24) des weiteren Steuerelements (22) den Anzeigebereich und damit insbesondere wenigstens ein Steuerelement (18, 20) überlagert.

11. Verfahren nach einem der vorigen Ansprüche, **dadurch gekennzeichnet, dass** wenigstens eines der Steuerelemente (18, 20) und/oder weiteren Steuerelemente (22) zur Steuerung und/oder Überwachung einer technischen Einrichtung dient, insbesondere wobei das Steuerelement (18, 20) und/oder das weitere Steuerelement (22) mit einem Aktor und/oder Sensor zusammenwirkt.

12. Verfahren nacheinem der vorigen Ansprüche, **dadurch gekennzeichnet, dass** es sich bei der technischen Einrichtung um ein Küchengerät, insbesondere eine Küchenmaschine, einen Herd einen Geschirrspüler und/oder einen Kühlschrank, ein haustechnisches und/oder haushaltstechnisches Gerät und/oder eine haustechnische Einrichtung, insbesondere eine Zugangskontrolleinrichtung zur Kontrolle des Zugangs zu einer Immobilie und/oder eines Bereichs einer Immobilie, handelt.

13. Verfahren nacheinem der vorigen Ansprüche, **dadurch gekennzeichnet, dass** wenigstens einem der Steuerelemente (18, 20) eine Mehrzahl Programme zugeordnet ist, mit denen mittels des Steuerelements (18, 20) interagiert werden kann, insbesondere wobei eines der Mehrzahl Programme ausgewählt werden kann, deren grafische Ausgabe in dem Steuerelement (18, 20) angezeigt wird und/oder dessen Funktionalitäten über Schaltflächen des wenigstens einen Steuerelements (18, 20) angesprochen werden können.

14. Verfahren nach einem der vorigen Ansprüche, **dadurch gekennzeichnet, dass** auf eine Nutzerinteraktion mit einem Steuerelement (18) hin eine Funktionalität eines diesem Steuerelement zugeordneten Programms aufgerufen wird und die Größe dieses Steuerelements durch die Software auf dieselbe Nutzerinteraktion hin auf eine für dieses Steuerelement und/oder dieses Programm definierte Nutzungsgröße verändert wird, insbesondere wobei die Nutzungsgrößen derart gewählt sind, dass wenigstens zwei Steuerelemente gleichzeitig in ihrer für das jeweilige Steuerelement und/oder das jeweilige Programm definierten Nutzungsgröße sichtbar angezeigt werden können.

## Claims

1. Method for providing a graphical user interface, wherein a graphical user interface is displayed by means of software on an image reproduction surface (10) of an image reproduction device, in particular a monitor and/or a display,
wherein a defined number of control elements (18, 20), in particular widgets and/or icons, are displayed in a display region (12) of the image reproduction surface (10) by the software, wherein the respective size of individual control elements (18, 20) is variable, wherein, when the size and/or position of a control element (18) is changed by the software, the size and/or position of other control elements (20) is adjusted on the basis of the change in the size and/or position of the one control element (18), **characterized in that** the software always changes the size and/or position of the control elements (20) in such a way that the entire defined number of control elements (18, 20) still remains visible.

2. Method according to Claim 1, **characterized in that** changes in the size and/or position of individual control elements (18) are only possible insofar as the size and/or position of other control elements (20) can be adjusted by the software in such a way that the total defined number of control elements (18, 20) is displayed so as to be still visible to the user.

3. Method according to one of the preceding claims, **characterized in that** the size and/or position of other control elements (20) is adjusted by the software in such a way that the control elements (18, 20) fill the display region (12), in particular wherein the sizes and/or positions of the individual control elements (20) are selected by the software in such a way that the entire area of the display region (12) is filled by control elements (18, 20) adjacent to each other in a two-dimensional pattern.

4. Method according to one of the preceding claims, **characterized in that** the display region (12) is divided into sections (16), in particular wherein the sections (16) form a regular two-dimensional grid filling the display region (12), and the control elements (18, 20) each extend over an integer number of sections (16).

5. Method according to one of the preceding claims, **characterized in that** different defined sizes are defined for individual control elements (18, 20) in each case and can each be assumed by these control elements (18, 20), and the appearance of the control element (18, 20) is defined in each case for these sizes, and in particular the functionality provided when the control element (18, 20) is displayed in the respective defined size is defined.

6. Method according to one of the preceding claims, **characterized in that** the size and/or position of the control elements (20) is adjusted by the software on the basis of the use of the respective control element (20), in particular wherein more frequently used control elements (20) and/or control elements (20) which were last used a shorter time ago are displayed so as to be larger and/or are arranged higher up in the display region than less frequently used control elements (20) and/or control elements (20) which were last used a longer time ago.

7. Method according to one of the preceding claims, **characterized in that** the size and/or position of a control element (18, 20) can be changed by a user interaction, in particular wherein buttons for enlarging and/or reducing the control element (18, 20) are displayed within the control element (18, 20).

8. Method according to one of the preceding claims, **characterized in that** the size and/or position of a control element (18, 20) will be changed by a triggering event, in particular wherein the control element (18, 20) assumes a certain defined size and/or position in response to the triggering event.

9. Method according to one of the preceding claims, **characterized in that** the display region (12) occupies a part of the image reproduction surface (10) of the image reproduction device and a further part of the image reproduction surface (10) is occupied by a further display region (14) in which further control elements (22), in particular widgets and/or icons, are displayed.

10. Method according to Claim 9, **characterized in that** a further control element (22) is displayed in an extended representation (24) by the software in response to a user interaction, in particular wherein the extended representation (24) of the further control element (22) overlays the display region and thus in particular at least one control element (18, 20).

11. Method according to one of the preceding claims, **characterized in that** at least one of the control elements (18, 20) and/or further control elements (22) serves for controlling and/or monitoring a technical device, in particular wherein the control element (18, 20) and/or the further control element (22) interacts with an actuator and/or sensor.

12. Method according to one of the preceding claims, **characterized in that** the technical device is a kitchen appliance, in particular a food processor, a cooker, a dishwasher and/or a refrigerator, a domestic and/or household appliance and/or a domestic device, in particular an access control device for controlling access to a property and/or a region of a property.

13. Method according to one of the preceding claims, **characterized in that** at least one of the control elements (18, 20) is assigned a plurality of programs, with which it is possible to interact by means of the control element (18, 20), in particular wherein one of the plurality of programs can be selected, the graphical output of which is displayed in the control element (18, 20) and/or the functionalities of which can be accessed via buttons of the at least one control element (18, 20).

14. Method according to one of the preceding claims, **characterized in that**, in response to a user interaction with a control element (18), a functionality of a program assigned to this control element is called up and the size of this control element is changed by the software to a usage size defined for this control element and/or this program in response to the same user interaction, in particular wherein the usage sizes are selected in such a way that at least two control elements can be displayed so as to be visible simultaneously in their usage size defined for the respective control element and/or the respective program.

## Revendications

1. Procédé pour fournir une interface utilisateur graphique, dans lequel une interface utilisateur graphique est affichée au moyen d'un logiciel sur une surface de reproduction d'image (10) d'un dispositif de reproduction d'image, en particulier un moniteur et/ou un écran,
un nombre défini d'éléments de commande (18, 20), en particulier des widgets et/ou des icônes, étant affichés par le logiciel dans une zone d'affichage (12) de la surface de reproduction d'image (10), la taille respective des différents éléments de commande (18, 20) étant variable,
lors de la modification de la taille et/ou de la position d'un élément de commande (18) par le logiciel, la taille et/ou la position d'autres éléments de commande (20) étant adaptée en fonction de la modification de la taille et/ou de la position de l'un des éléments de commande (18), **caractérisé en ce que** la modification de la taille et/ou de la position des éléments de commande (20) par le logiciel s'effectue toujours de telle sorte que la totalité du nombre défini d'éléments de commande (18, 20) reste visible.

2. Procédé selon la revendication 1, **caractérisé en ce que** des modifications de la taille et/ou de la position d'éléments de commande individuels (18) ne sont possibles que dans la mesure où la taille et/ou la position d'autres éléments de commande (20) peut être adaptée par le logiciel de telle sorte que la totalité du nombre défini d'éléments de commande (18, 20) reste affichée de manière visible pour l'utilisateur.

3. Procédé selon l'une quelconque des revendications précédentes, **caractérisé en ce que** la taille et/ou la position d'autres éléments de commande (20) est adaptée par le logiciel de telle sorte que les éléments de commande (18, 20) remplissent la zone d'affichage (12), en particulier dans lequel les tailles et/ou les positions des différents éléments de commande (20) sont sélectionnées par le logiciel de telle sorte que la totalité de la surface de la zone d'affichage (12) soit remplie par des éléments de commande (18, 20) qui sont contigus les uns aux autres selon un motif bidimensionnel.

4. Procédé selon l'une quelconque des revendications précédentes, **caractérisé en ce que** la zone d'affichage (12) est subdivisée en zones partielles (16), en particulier dans lequel les zones partielles (16) forment une trame bidimensionnelle régulière remplissant la zone d'affichage (12), et les éléments de commande (18, 20) s'étendent respectivement sur un nombre entier de zones partielles (16).

5. Procédé selon l'une quelconque des revendications précédentes, **caractérisé en ce que**, pour des éléments de commande individuels (18, 20), différentes tailles définies que ces éléments de commande (18, 20) peuvent respectivement prendre sont définies, l'aspect de l'élément de commande (18, 20) étant respectivement défini pour ces tailles, et en particulier la fonctionnalité qui est fournie lors de l'affichage de l'élément de commande (18, 20) dans la taille définie respective étant définie.

6. Procédé selon l'une quelconque des revendications précédentes, **caractérisé en ce que** l'adaptation de la taille et/ou de la position des éléments de commande (20) par le logiciel s'effectue en fonction de l'utilisation de l'élément de commande (20) respectif, en particulier dans lequel des éléments de commande (20) utilisés plus fréquemment et/ou des éléments de commande (20) dont la dernière utilisation remonte à un temps plus court sont affichés plus grands et/ou disposés plus haut sur la zone d'affichage que des éléments de commande (20) utilisés moins fréquemment et/ou que des éléments de commande (20) dont la dernière utilisation remonte à un temps plus long.

7. Procédé selon l'une quelconque des revendications précédentes, **caractérisé en ce que** la taille et/ou la position d'un élément de commande (18, 20) peut être modifiée par une interaction de l'utilisateur, en particulier dans lequel des boutons destinés à agrandir et/ou réduire l'élément de commande (18, 20) sont affichés à l'intérieur de l'élément de commande (18, 20).

8. Procédé selon l'une quelconque des revendications précédentes, **caractérisé en ce que** la taille et/ou la position d'un élément de commande (18, 20) sera modifiée par un événement déclencheur, en particulier dans lequel l'élément de commande (18, 20) prend une taille et/ou une position définie déterminée à la suite de l'événement déclencheur.

9. Procédé selon l'une quelconque des revendications précédentes, **caractérisé en ce que** la zone d'affichage (12) occupe une partie de la surface de reproduction d'image (10) du dispositif de reproduction d'image et **en ce qu'**une autre partie de la surface de reproduction d'image (10) est occupée par une autre zone d'affichage (14) dans laquelle d'autres éléments de commande (22), en particulier des widgets et/ou des icônes, sont affichés.

10. Procédé selon la revendication 9, **caractérisé en ce qu'**un autre élément de commande (22) est affiché par le logiciel dans une représentation élargie (24) à la suite d'une interaction de l'utilisateur, en particulier dans lequel la représentation élargie (24) de l'autre élément de commande (22) se superpose à la zone d'affichage et ainsi en particulier à au moins un élément de commande (18, 20).

11. Procédé selon l'une quelconque des revendications précédentes, **caractérisé en ce qu'**au moins l'un des éléments de commande (18, 20) et/ou des autres éléments de commande (22) sert à la commande et/ou à la surveillance d'un équipement technique, en particulier dans lequel l'élément de commande (18, 20) et/ou l'autre élément de commande (22) coopère avec un actionneur et/ou un capteur.

12. Procédé selon l'une quelconque des revendications précédentes, **caractérisé en ce que** l'équipement technique est un appareil ménager de cuisine, en particulier un robot culinaire, une cuisinière, un lave-vaisselle et/ou un réfrigérateur, un appareil domotique et/ou électroménager et/ou une installation domotique, en particulier un dispositif de contrôle d'accès pour contrôler l'accès à une propriété et/ou à une zone d'une propriété.

13. Procédé selon l'une quelconque des revendications précédentes, **caractérisé en ce qu'**une pluralité de programmes avec lesquels il est possible d'interagir au moyen de l'élément de commande (18, 20) est associée à au moins l'un des éléments de commande (18, 20), en particulier dans lequel l'un de la pluralité de programmes peut être sélectionné, dont la sortie graphique est affichée dans l'élément de commande (18, 20) et/ou dont les fonctionnalités peuvent être sollicitées par l'intermédiaire de boutons dudit au moins un élément de commande (18, 20).

14. Procédé selon l'une quelconque des revendications précédentes, **caractérisé en ce que**, à la suite d'une interaction de l'utilisateur avec un élément de commande (18), une fonctionnalité d'un programme associé à cet élément de commande est appelée et la taille de cet élément de commande est modifiée par le logiciel à la suite de la même interaction de l'utilisateur à une taille d'utilisation définie pour cet élément de commande et/ou ce programme, en particulier dans lequel les tailles d'utilisation sont sélectionnées de telle sorte qu'au moins deux éléments de commande puissent être affichés simultanément de manière visible dans leur taille d'utilisation définie pour l'élément de commande respectif et/ou le programme respectif.
